# EUROPEAN PATENT APPLICATION

(11) **EP 4 550 555 A1**
(43) Date of publication of application: **07.05.2025**
(21) Application number: 23907463.6
(22) Date of filing: 24.11.2023
(51) Int. Cl.: H01M 50/317, H01M 10/48, H01M 50/30, H01M 50/296, H01M 50/249, H01M 50/325

(54) **BATTERY PACK**

(30) Priority: 23.12.2022 KR 20220183755; 16.06.2023 KR 20230077597
(71) Applicant: LG Energy Solution, Ltd., Seoul 07335 (KR)
(72) Inventor: JEONG, Tae-Cheol, Daejeon 34122 (KR); YANG, Kun-Joo, Daejeon 34122 (KR)
(74) Representative: Plasseraud IP
(86) International application number: PCT/KR2023/019136
(87) International publication number: WO 2024/136177

(57) **Abstract**

Disclosed is a battery pack. A battery pack according to an embodiment of the present disclosure may include: a case configured to provide inner space; a battery cell disposed inside the case; at least one or more sensors disposed inside the case; a ventilation module provided in the case and configured to be opened and closed; and a fan located inside the case.

## Description

### TECHNICAL FIELD

The present disclosure relates to a battery pack.

The present application claims priority to Korean Patent Application No. 10-2022-0183755 filed on December 23, 2022 and Korean Patent Application No. 10-2023-0077597 filed on June 16, 2023 in the Republic of Korea, the disclosures of which are incorporated herein by reference.

### BACKGROUND ART

As the demand for portable electronic products such as laptops, video cameras, mobile phones, and the like rapidly increases, and as robots, electric vehicles, and the like are progressively commercialized, active researches on high-performance secondary batteries capable of being repeatedly charged and discharged are underway.

Currently commercialized secondary batteries include nickel-cadmium batteries, nickel-hydrogen batteries, nickel-zinc batteries, and lithium secondary batteries. Among them, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween and an exterior case, i.e., a battery case, that seals and stores the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving or energy storage, such as electric vehicles and energy storage systems (ESSs), as well as in small devices such as portable electronic devices. A plurality of secondary batteries described above may be electrically connected and stored inside a module case to form one battery module. In addition, multiple battery modules described above may be connected to configure one battery pack.

However, in the case where a large number of battery cells or a large number of battery modules are densely stored in a small space, they may be vulnerable to a thermal event. In particular, if an event such as thermal runaway occurs in any one battery cell, high-temperature gas, flame, and heat may be generated. If such gas, flame, or heat transfers to other battery cells included in the same battery module, an explosive chain reaction such as thermal propagation may occur. In addition, this chain reaction may cause accidents such as fire or explosion in other battery modules, as well as in the relevant battery module.

Moreover, since medium and large battery packs used in electric vehicles or the like include a large number of battery cells and battery modules to increase output and/or capacity, the risk of a thermal chain reaction may be further increased. In addition, in the case of a battery pack mounted to an electric vehicle or the like, there may be users such as drivers nearby. Therefore, if a thermal event occurring in a specific battery module fails to be controlled to lead to a chain reaction, it may cause significant property damage and casualties.

### DISCLOSURE

### Technical Problem

The present disclosure is intended to solve the problems described above and other problems.

The present disclosure may also be intended to provide a battery pack capable of suppressing heat propagation.

The present disclosure may also be intended to provide a battery pack capable of venting gases caused by a thermal event to the outside.

The present disclosure may also be intended to provide a battery pack capable of blocking flame or fire caused by a thermal event from spreading to the outside.

### Technical Solution

According to one aspect of the present disclosure, there is provided a battery pack including: a case configured to provide inner space; a battery cell disposed inside the case; at least one or more sensors disposed inside the case; a ventilation module provided in the case and configured to be opened and closed; and a fan located inside the case.

In addition, the battery pack may further include an air filter provided in the case.

In addition, the ventilation module may include: an opening extending long; and a plurality of shutters configured to open and close the opening.

In addition, a plurality of fans may be provided and disposed in the longitudinal direction of the opening.

In addition, the battery pack may further include a processor electrically connected to the battery cell.

In addition, the battery cell may be disposed between the processor and the ventilation module.

In addition, the battery pack may further include a connector provided in the case and configured to be connected to an external device.

In addition, the battery cell may be disposed between the connector and the ventilation module.

In addition, the at least one or more sensors may include a plurality of temperature sensors, and the battery pack may further include a processor that is configured to open the ventilation module and drive the fan if a difference between the maximum and the minimum of temperature values respectively measured by the plurality of temperature sensors exceeds a first value.

In addition, the processor may be configured to close the ventilation module if a difference between the maximum and the minimum of temperature values respectively measured by the plurality of temperature sensors exceeds a second value, which is greater than the first value.

The at least one or more sensors may include a plurality of pressure sensors, and the battery pack may further include a processor that is configured to open the ventilation module and drive the fan if a difference between the maximum and the minimum of pressure values respectively measured by the plurality of pressure sensors exceeds a third value.

In addition, the processor may be configured to close the ventilation module if a difference between the maximum and the minimum of pressure values respectively measured by the plurality of pressure sensors exceeds a fourth value, which is greater than the third value.

A vehicle according to an embodiment of the present disclosure includes the battery pack according to the present disclosure.

### Advantageous Effects

According to at least one of the embodiments of the present disclosure, it is possible to provide a battery pack capable of suppressing heat propagation.

According to at least one of the embodiments of the present disclosure, it is possible to provide a battery pack capable of venting gases caused by a thermal event to the outside.

According to at least one of the embodiments of the present disclosure, it is possible to provide a battery pack capable of blocking flame or fire caused by a thermal event from spreading to the outside.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery pack according to an embodiment of the present disclosure.
FIG. 2 is a diagram illustrating the configuration of a battery pack according to an embodiment of the present disclosure.
FIG. 3 is a diagram illustrating the inside of the battery pack taken along the cutting line A-A' in FIG. 1.
FIG. 4 is a diagram illustrating a ventilation module of a battery pack according to an embodiment of the present disclosure.
FIG. 5 is a diagram illustrating a modified embodiment of the battery pack taken along the cutting line A-A' in FIG. 1.
FIGS. 6 and 7 are diagrams illustrating an air filter according to an embodiment of the present disclosure.
FIG. 8 is a diagram illustrating the inside of the battery pack taken along the cutting line A-A' in FIG. 1.
FIG. 9 is a diagram illustrating a battery pack according to another embodiment of the present disclosure.
FIG. 10 is a diagram illustrating the configuration of a battery pack according to another embodiment of the present disclosure.
FIGS. 11 and 12 are diagrams illustrating the inside of the battery pack taken along the cutting line B-B' in FIG. 10.
FIG. 13 is a control configuration diagram of a battery pack according to an embodiment of the present disclosure.
FIG. 14 is a control flowchart of a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

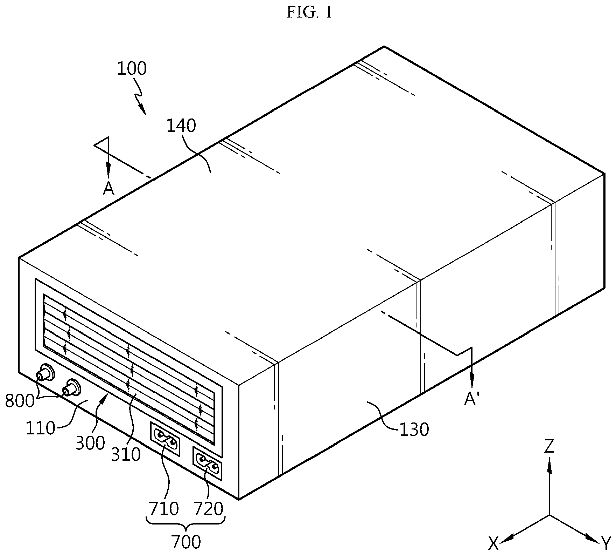

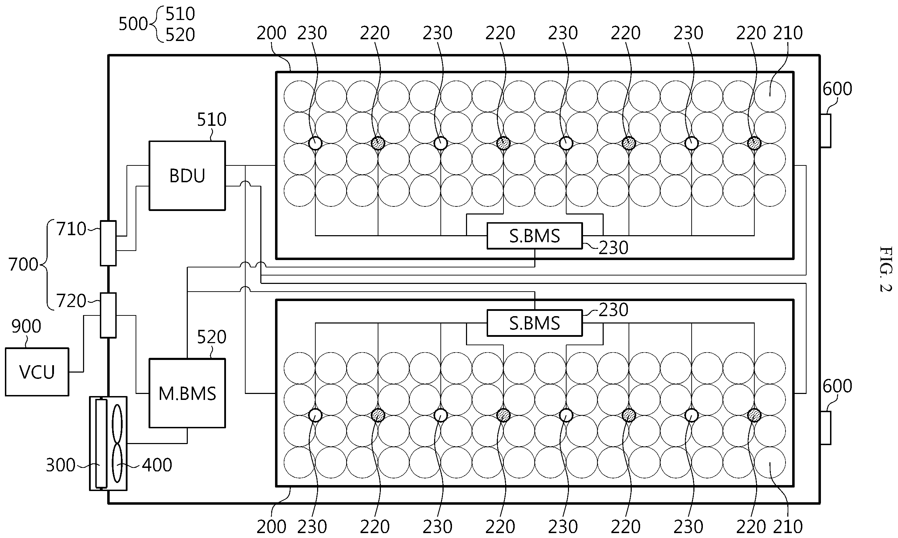

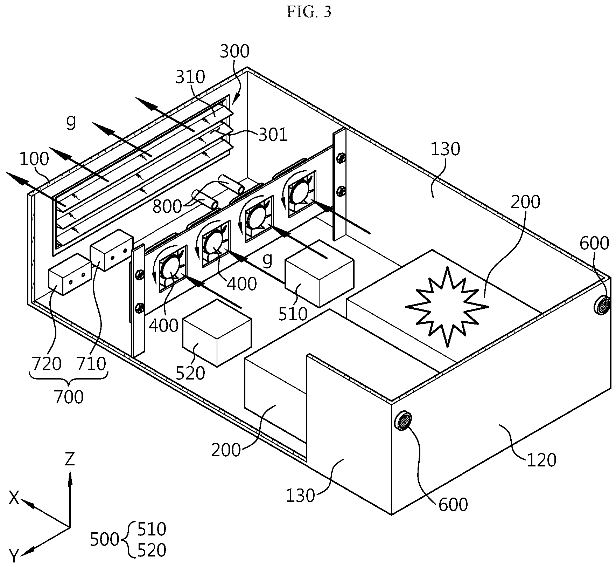

FIG. 1 is a diagram illustrating a battery pack according to an embodiment of the present disclosure. FIG. 2 is a diagram illustrating the configuration of a battery pack according to an embodiment of the present disclosure. FIG. 3 is a diagram illustrating the inside of the battery pack taken along the cutting line A-A' in FIG. 1. Referring to FIGS. 1 to 3, a battery pack according to an embodiment of the present disclosure may include a case 100, a battery cell 210, at least one or more sensors 220 and 230, a ventilation module 300, and a fan 400.

The case 100 may provide an inner space. The case 100 may have the shape of a rectangular parallelepiped. The case 100 may be configured as a plurality of parts. The plurality of parts may be fastened, coupled, welded, or attached. The case 100 may be comprised of a top plate 140, a base plate 150, a front plate 110, a rear plate 120, and a side plate 130.

The battery module 200 may be located inside the case 100. A plurality of battery modules 200 may be provided therein. **In** addition, the battery module 200 may be fastened, coupled, welded, attached, or fixed to at least one of the base plate 150, the side plate 130, the front plate 110, the rear plate 120, and the top plate 140 of the case 100.

The battery module 200 may include a battery cell 210. Here, the battery cell 210 may indicate a secondary battery. The battery cell 210 may have a cylindrical shape. The battery module 200 may include a plurality of battery cells 210. The plurality of battery cells 210 may form an array or may be stacked.

The battery module 200 may include at least one or more sensors 220 and 230. The sensors 220 and 230 may detect the state of the battery cell 210. The plurality of sensors 220 and 230 may be disposed to be distributed at various locations of the battery module 200 in order to detect the states of the plurality of battery cells 210.

The ventilation module 300 may be provided in the case 100. For example, the ventilation module 300 may be provided on the front plate 110. The ventilation module 300 may be installed, fastened, coupled, fixed, welded, or attached to the case 100. The ventilation module 300 may be configured to be open and closed. The ventilation module 300 may cause the inner space of the case 100 to communicate with the outside of the case 100, or may isolate the inner space of the case 100 from the outside of the case 100. When the ventilation module 300 is opened, the inner space of the case 100 may communication with the outside thereof. When the ventilation module 300 is closed, the inner space of the case 100 may be isolated from the outside thereof.

The fan 400 may be located inside the case 100. The fan 400 may be fastened, coupled, welded, attached, or fixed to at least one of the base plate 150, the side plate 130, the front plate 110, the rear plate 120, and the top plate 140 of the case 100, or the ventilation module 300. The fan 400 may be disposed adjacent to the ventilation module 300. Alternatively, the fan 400 may be disposed to face the ventilation module 300. Alternatively, the fan 400 may produce a flow toward the ventilation module 300.

According to this configuration of the present disclosure, the interior of the battery pack may selectively communicate with the exterior. Additionally, the battery pack may open and close the ventilation module 300 on the basis of the state of the battery cell 210. In addition, if the ventilation module 300 is open, the battery pack may drive the fan 400, thereby increasing venting efficiency. As a result, the thermal safety of the battery pack may be improved. For example, when a thermal event occurs in the battery module 200, the temperature or pressure may increase inside the battery pack or venting gas g may be generated. At this time, if the ventilation module 300 is opened and if the fan 400 is driven, the temperature or pressure inside the battery may quickly drop and the venting gas g may be quickly discharged to the outside.

Referring to FIGS. 1 to 3, a battery pack according to an embodiment of the present disclosure may include one or more sensors 220 and 230. Each battery module 200 may include one or more sensors 220 and 230. For example, the battery module 200 may include four pressure sensors 230 and four temperature sensors 220, respectively. A plurality of pressure sensors 230 and temperature sensors 220 may be positioned to be distributed according to the distribution of the plurality of battery cells 210. The plurality of pressure sensors 230 and temperature sensors 220 may sense the pressure and temperature around the plurality of battery cells 210.

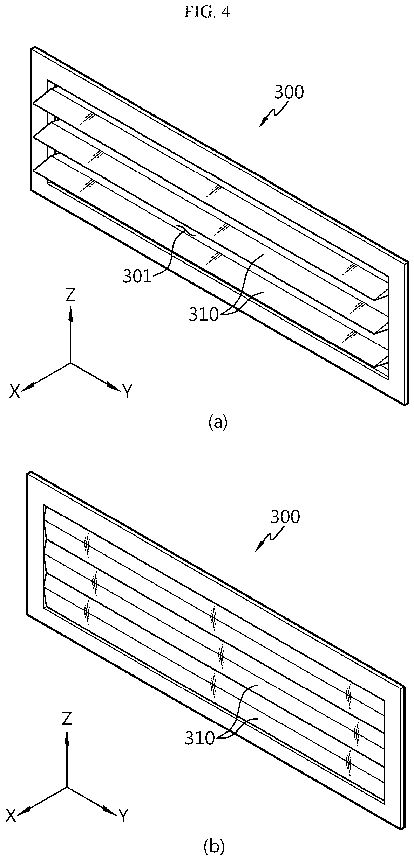

FIG. 4 is a diagram illustrating a ventilation module 300 of a battery pack according to an embodiment of the present disclosure. Referring to FIG. 4, the ventilation module 300 according to an embodiment of the present disclosure may include a long extending opening 301 and a plurality of shutters 310 configured to open and close the opening 301. Diagram (a) in FIG. 4 may show that the ventilation module 300 is open, and diagram (b) in FIG. 4 may show that the ventilation module 300 is closed. The ventilation module 300 may have an opening 301 that extends long in the left and right directions or in the Y-axis direction. The shutter 310 may extend long in the left and right directions or in the Y-axis direction. Additionally, a plurality of shutters 310 may be provided and disposed in the vertical direction or in the Z-axis direction. The shutters 310 may open and close the opening 301. Each of the plurality of shutters 310 may swing.

When the ventilation module 300 is closed, the ventilation module 300 may prevent moisture or foreign substances from entering the case 100 through the opening 301. To this end, the shutter 310 may be made of EPDM (ethylene propylene diene monomer).

According to this configuration of the present disclosure, the ventilation module 300 may selectively keep the interior of the case 100 waterproof or dustproof.

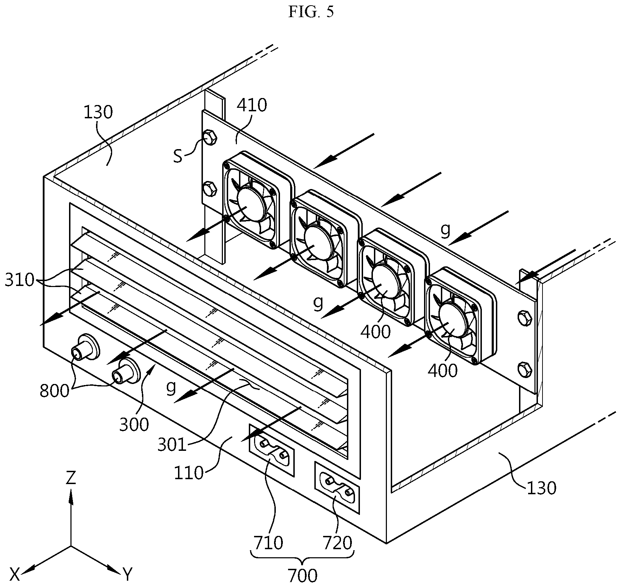

FIG. 5 is a diagram illustrating a modified embodiment of the battery pack taken along the cutting line A-A' in FIG. 1. Referring to FIG. 5, in a battery pack according to an embodiment of the present disclosure, a plurality of fans 400 may be provided to be disposed in the longitudinal direction of the opening 301. The plurality of fans 400 may be disposed in the left and right directions or in the Y-axis direction. The plurality of fans 400 may face the ventilation module 300. Alternatively, the plurality of fans 400 may produce a flow toward the ventilation module 300. The plurality of fans 400 may be installed on the bracket 410. The bracket 410 may be fastened, coupled, welded, attached, or fixed to at least one of the base plate 150, the side plate 130, the front plate 110, the rear plate 120, and the top plate 140 of the case 100, or the ventilation module 300. For example, one side of the bracket 410 may be fastened to the side plate 130 by a fastening member S.

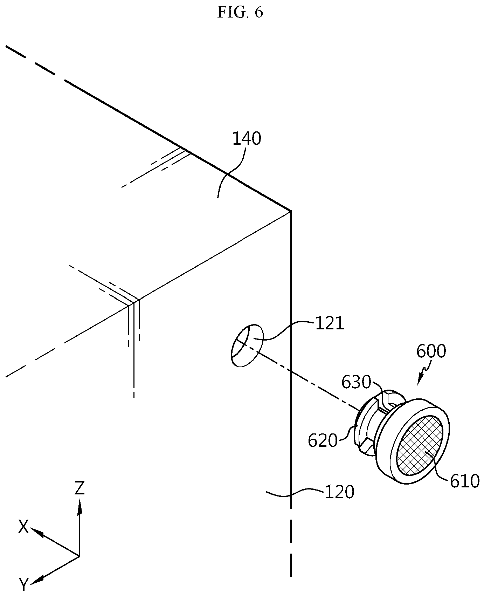

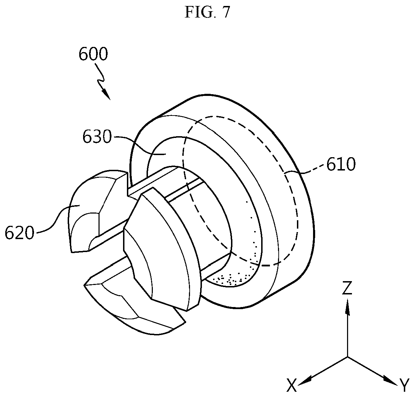

FIGS. 6 and 7 are diagrams illustrating an air filter 600 according to an embodiment of the present disclosure. Referring to FIGS. 6 and 7, a battery pack according to an embodiment of the present disclosure may include an air filter 600. The air filter 600 may be provided in the case 100. For example, the air filter 600 may be provided on the rear plate 120. The rear plate 120 may have a hole 121. The air filter 600 may include a fastening portion 620 fastened to the hole 121, a filter portion 610 through which air passes, and a sealing ring 630 provided between the filter portion 610 and the fastening portion 620. The air filter 600 may allow air to pass therethrough such that the air remains at the same pressure between the inside of the case 100 and the outside thereof. Additionally, the air filter 600 may prevent external moisture or foreign substances from entering the case 100.

According to this configuration of the present disclosure, the battery pack may maintain the same air pressure inside and outside the case 100 through the air filter 600. In addition, if the air pressure or temperature inside the case 100 increases in the battery pack to fail to maintain an appropriate temperature or pressure only by the air filter 600, the ventilation module 300 may be further opened.

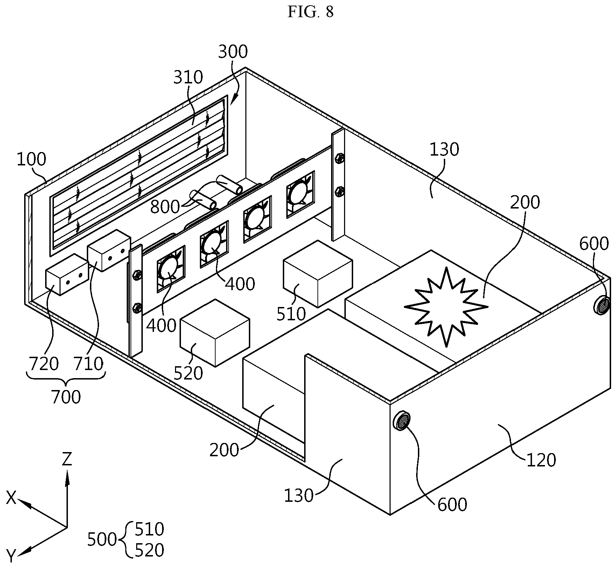

FIG. 8 is a diagram illustrating the inside of the battery pack taken along the cutting line A-A' in FIG. 1. Referring to FIG. 8, the battery pack according to an embodiment of the present disclosure may close the ventilation module 300 when a fire occurs. In the battery pack, the open ventilation module 300 may be closed if the temperature and pressure inside the case 100 rise to the extent that a fire is determined to occur. This may block flames from spreading or leaking to the outside of the battery pack.

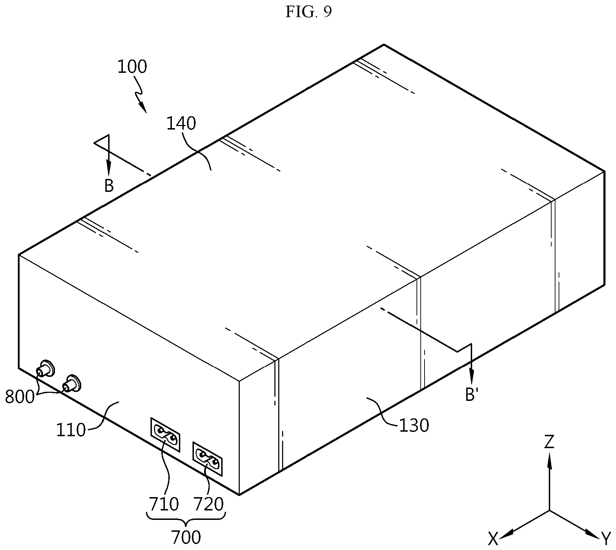

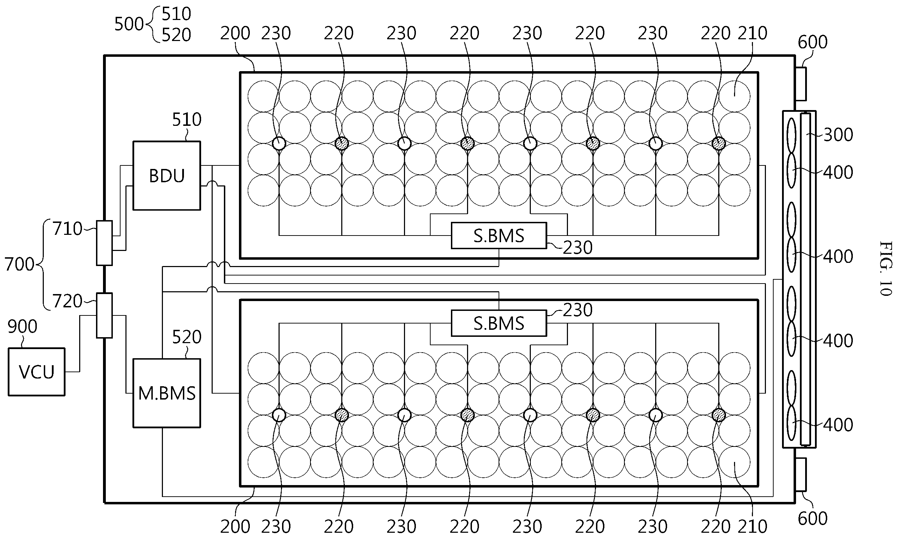

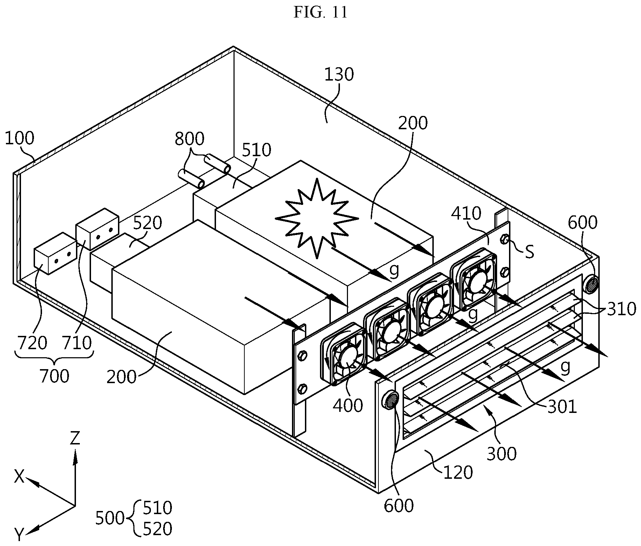

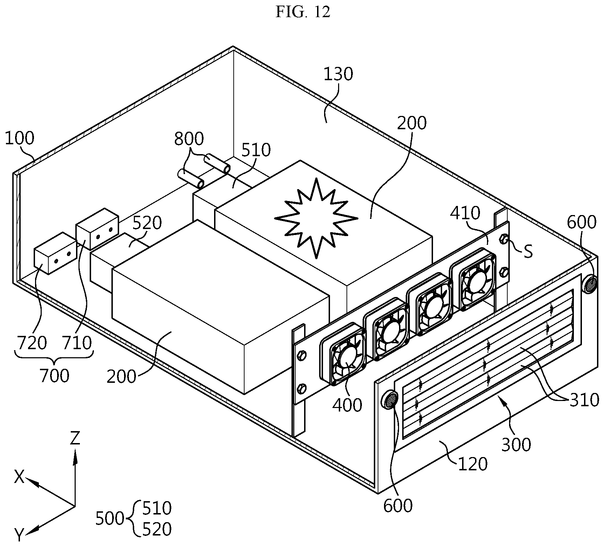

FIG. 9 is a diagram illustrating a battery pack according to another embodiment of the present disclosure. FIG. 10 is a diagram illustrating the configuration of a battery pack according to another embodiment of the present disclosure. FIGS. 11 and 12 are diagrams illustrating the inside of the battery pack taken along the cutting line B-B' in FIG. 10. Referring to FIGS. 9 to 12, a battery pack according to an embodiment of the present disclosure may further include a processor 500 electrically connected to the battery cell 210, and the battery cell 210 may be disposed between the processor 500 and the ventilation module 300.

The processor 500 may include a BDU (Battery Disconnect Unit) 510 and a master BMS (Battery Management System) 520. The BDU 510 may control the output of power from the battery pack to the outside or the input of power from the outside into the battery pack through a first connector 710. The master BMS 520 may be configured to exchange control information or signals of the battery pack with the vehicle through a second connector 720. The master BMS 520 may be electrically connected to a slave BMS 240. A slave BMS 240 may be provided in each battery module 200. The slave BMS 240 may be configured to exchange control information or state information of the battery module 200 with the master BMS 520. Additionally, the slave BMS 240 may obtain state information of the battery cell 210 included in the relevant battery module 200.

The battery module 200 may be located between the processor 500 and the ventilation module 300. In addition, the fan may be located between the battery module 200 and the ventilation module 300.

According to this configuration of the present disclosure, venting gas g generated in the battery module 200 may be discharged to the outside through the ventilation module 300, instead of passing through the processor 500. As a result, the processor 500 may not be exposed to the high-temperature venting gas g. Therefore, the stability of the battery pack may be improved.

Referring to FIGS. 9 to 12, the battery pack according to an embodiment of the present disclosure may further include a connector 700 provided in the case 100 and configured to be connected to an external device, and the battery cell 210 may be disposed between the connector and the ventilation module 300.

The ventilation module 300 may be provided on the rear plate 120. The first connector 710 and the second connector 720 may be provided on the front plate. The processor 500 may be located adjacent to the front plate 110 or adjacent to the first connector 710 and the second connector 720. In addition, a cooling port 800 for cooling the battery pack may be provided on the front plate 110. The cooling fluid may flow through the cooling port 800.

The vehicle and the battery pack may be physically or electrically connected through the first connector 710 and the second connector 720.

According to this configuration of the present disclosure, venting gas g generated in the battery module 200 may be discharged to the outside through the ventilation module 300, instead of passing through the connector 700. As a result, the connector may not be exposed to the high-temperature venting gas g. Therefore, the stability of the battery pack may be improved.

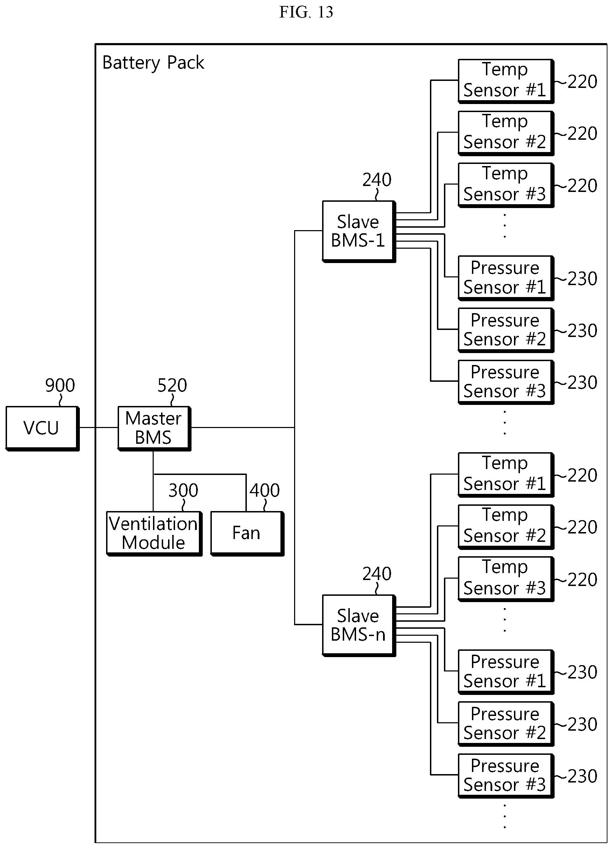

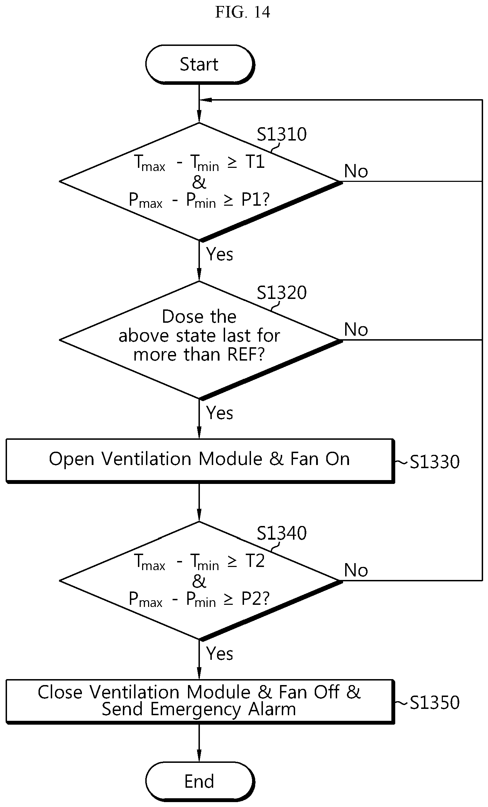

FIG. 13 is a control configuration diagram of a battery pack according to an embodiment of the present disclosure. FIG. 14 is a control flowchart of a battery pack according to an embodiment of the present disclosure. Referring to FIGS. 13 and 14, at least one or more sensors 220 or 230 of a battery pack according to an embodiment of the present disclosure may include a plurality of temperature sensors 220. In addition, the battery pack according to an embodiment of the present disclosure may further include a processor 500 that opens the ventilation module 300 and drives the fan 400 if a difference between the maximum Tₘₐₓ and the minimum Tₘᵢₙ of the temperature values respectively measured by the plurality of temperature sensors 220 exceeds a first value T1.

If a thermal event occurs in the battery cell 210, the temperature value measured by the temperature sensor 220 adjacent to the battery cell 210 where the thermal event occurred may be the maximum temperature value Tₘₐₓ. In addition, the temperature value measured by the temperature sensor 220 adjacent to the battery cell 210, which is far away from the battery cell 210 where the thermal event occurred, may be the minimum temperature value Tₘᵢₙ. For example, if the difference between the maximum Tₘₐₓ and the minimum Tₘᵢₙ of the temperature values exceeds 60 degrees C, the processor 500 may open the ventilation module 300 and drive the fan 400.

According to this configuration in the present disclosure, the battery pack may detect thermal events and quickly discharge venting gas g to the outside. As a result, the internal temperature of the battery pack may be quickly lowered.

Referring to FIGS. 13 and 14, the processor 500 of the battery pack according to an embodiment of the present disclosure may be configured to close the ventilation module 300 if a difference between the maximum Tₘₐₓ and the minimum Tₘᵢₙ of temperature values respectively measured by the plurality of temperature sensors 220 exceeds a second value T2, which is greater than the first value T1.

For example, the first value may be 60 degrees C, and the second value T2 may be 200 degrees C. If the difference between the maximum Tₘₐₓ and the minimum Tₘᵢₙ of the temperature values respectively measured by the plurality of temperature sensors 220 is equal to or greater than a second value T2, which is greater than the first value T1, the processor 500 may determine that a fire has occurred inside the battery pack, and may close the ventilation module 300 and turn off the fan 400.

According to this configuration of the present disclosure, the battery pack may block flame or fire from spreading to the outside.

Referring to FIGS. 13 and 14, at least one or more sensors 220 and 230 of the battery pack according to an embodiment of the present disclosure may include a plurality of pressure sensors 230. In addition, the battery pack according to an embodiment of the present disclosure may further include a processor 500 that opens the ventilation module 300 and drives the fan 400 if a difference between the maximum Pₘₐₓ and the minimum Pₘᵢₙ of the pressure values respectively measured by the plurality of pressure sensors 230 exceeds a third value P1.

If a thermal event occurs in the battery cell 210, the pressure value measured by the pressure sensor 230 adjacent to the cell where the thermal event occurred may be the maximum pressure value Pₘₐₓ. Additionally, the pressure value measured by the pressure sensor 230 adjacent to the battery cell 210, which is far away from the battery cell 210 where the thermal event occurred, may be the minimum pressure value Pₘᵢₙ. For example, if the difference between the maximum Pₘₐₓ and the minimum Pₘᵢₙ of the pressure values exceeds 1.5 bar, the processor 500 may open the ventilation module 300 and drive the fan 400.

According to this configuration in the present disclosure, the battery pack may detect thermal events and quickly discharge venting gas g to the outside. As a result, the internal pressure of the battery pack may be quickly lowered.

Referring to FIGS. 13 and 14, the processor 500 of the battery pack according to an embodiment of the present disclosure may be configured to close the ventilation module 300 if a difference between the maximum Pₘₐₓ and the minimum Pₘᵢₙ of the pressure values respectively measured by the plurality of pressure sensors 230 exceeds a fourth value P2, which is greater than the third value P1.

For example, the third value P1 may be 1.5 bar, and the second value P2 may be 2 bar. If the difference between the maximum Pₘₐₓ and the minimum Pₘᵢₙ of the pressure values respectively measured by the plurality of pressure sensors 230 exceeds a fourth value P2, which is greater than the third value P1, the processor 500 may determine that a fire has occurred inside the battery pack, and may close the ventilation module 300 and turn off the fan 400.

According to this configuration of the present disclosure, the battery pack may block flame or fire from spreading to the outside.

Referring to FIGS. 13 and 14, the processor 500 of the battery pack according to an embodiment of the present disclosure may determine whether a difference between the maximum Tₘₐₓ and the minimum Tₘᵢₙ of the temperature values measured by the plurality of temperature sensors 220 is equal to or greater than a first value T1 and whether a difference between the maximum Pₘₐₓ and the minimum Pₘᵢₙ of the pressure values measured by the plurality of pressure sensors 230 is equal to or greater than a third value P1 (S1310). At this time, the temperature values measured by the plurality of temperature sensors 220 may be transmitted to the master BMS 520 through the slave BMSs 240. In addition, the pressure values measured by the plurality of pressure sensors 230 may be transmitted to the master BMS 520 through the slave BMSs 240. For example, the first value T1 may be 60 degrees C, and the third value P1 may be 1.5 bar.

If the difference between the maximum Tₘₐₓ and the minimum Tₘᵢₙ of the temperature values is equal to or greater than the first value T1, and if the difference between the maximum Pₘₐₓ and the minimum Pₘᵢₙ of the pressure values is equal to or greater than the third value P1, the processor 500 may determine whether such a state lasts a predetermined period of time REF or longer (S1320). The predetermined period of time REF may be a few seconds or minutes. The predetermined period of time REF may also be referred to as delay time REF.

If the state where the difference between the maximum Tₘₐₓ and the minimum Tₘᵢₙ of the temperature values is equal to or greater than the first value T1 and where the difference between the maximum Pₘₐₓ and the minimum Pₘᵢₙ of the pressure values is equal to or greater than the third value P1 lasts a predetermined period of time REF or longer, the processor 500 may open the ventilation module 300 and drive the fan 400 (S1330). In addition, the processor 500 may transmit state information of the battery pack to a VCU (Vehicle Control Unit). Additionally, the processor 500 may reduce or shut off the power transmitted from the battery pack to the vehicle. Alternatively, the VCU 900 may control the processor to reduce or shut off the power transmitted from the battery pack to the vehicle.

The processor 500 may determine whether a difference between the maximum Tₘₐₓ and the minimum Tₘᵢₙ of the temperature values measured by the plurality of temperature sensors 220 is equal to or greater than a second value T2 and whether a difference between the maximum Pₘₐₓ and the minimum Pₘᵢₙ of the pressure values measured by the plurality of pressure sensors 230 is equal to or greater than a fourth value P2 in the state in which the ventilation module 300 is open and the fan 400 is being driven (S1340). The second value T2 may be greater than the first value T1. The fourth value P2 may be greater than the third value P1. For example, the second value T2 may be 200 degrees C, and the fourth value P2 may be 2 bar. In addition, the VCU may output a warning signal, danger signal, or emergency signal to the occupants of the vehicle.

If the difference between the maximum Tₘₐₓ and the minimum Tₘᵢₙ of the temperature values is equal to or greater than the second value T2 and if the difference between the maximum Pₘₐₓ and the minimum Pₘᵢₙ of the pressure values is equal to or greater than the fourth value P2, the processor 500 may close the ventilation module 300 and turn off the fan 400 (S1350). In addition, the processor 500 may transmit state information of the battery pack to the VCU (Vehicle Control Unit). The VCU may output warning signals, preparedness signals, danger signals, or emergency signals to the occupants of the vehicle. In addition, the processor 500 may reduce or shut off the power transmitted from the battery pack to the vehicle. Alternatively, the VCU 900 may control the processor to reduce or shut off the power transmitted from the battery pack to the vehicle.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, in addition to the battery pack. For example, the vehicle according to the present disclosure may further include a car body, a motor, and control devices such as an ECU (electronic control unit) in addition to the battery pack according to the present disclosure.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a case configured to provide inner space;
a battery cell disposed inside the case;
at least one or more sensors disposed inside the case;
a ventilation module provided in the case and configured to be opened and closed; and
a fan located inside the case.

2. The battery pack according to claim 1,
further including an air filter provided in the case.

3. The battery pack according to claim 1,
wherein the ventilation module comprises:
an opening extending long; and
a plurality of shutters configured to open and close the opening.

4. The battery pack according to claim 3,
wherein a plurality of fans is provided and
disposed in the longitudinal direction of the opening.

5. The battery pack according to claim 1,
further comprising a processor electrically connected to the battery cell,
wherein the battery cell is
disposed between the processor and the ventilation module.

6. The battery pack according to claim 1,
further comprising a connector provided in the case and configured to be connected to an external device,
wherein the battery cell is
disposed between the connector and the ventilation module.

7. The battery pack according to claim 1,
wherein the at least one or more sensors comprises
a plurality of temperature sensors,
further comprising
a processor configured to open the ventilation module and drive the fan if a difference between the maximum and the minimum of temperature values respectively measured by the plurality of temperature sensors exceeds a first value.

8. The battery pack according to claim 7,
wherein the processor is configured to
close the ventilation module if a difference between the maximum and the minimum of temperature values respectively measured by the plurality of temperature sensors exceeds a second value, which is greater than the first value.

9. The battery pack according to claim 1,
wherein the at least one or more sensors comprise
a plurality of pressure sensors,
further comprising a processor configured to open the ventilation module and drive the fan if a difference between the maximum and the minimum of pressure values respectively measured by the plurality of pressure sensors exceeds a third value.

10. The battery pack according to claim 9,
wherein the processor is configured to
close the ventilation module if a difference between the maximum and the minimum of pressure values respectively measured by the plurality of pressure sensors exceeds a fourth value, which is greater than the third value.

11. A vehicle including the battery pack of any one of claims 1 to 10.
